# EUROPEAN PATENT APPLICATION

(11) **EP 2 613 226 A1**
(43) Date of publication of application: **10.07.2013**
(21) Application number: 12305009.8
(22) Date of filing: 05.01.2012
(51) Int. Cl.: G06F 3/01

(54) **Initiating a logical connection between two devices using eye-gazing detection**

(71) Applicant: Alcatel Lucent, 75007 Paris (FR)
(72) Inventor: Van Broeck, Sigurd, 2980 Zoersel (BE); Van den Broeck, Marc, 2860 Sint-Katelijne Waver (BE); Lou, Zhe, 2640 Mortsel (BE)
(74) Representative: D'Halleweyn, Nele Veerle Trees Gertrudis

(57) **Abstract**

Method for initiating a logical connection between a first device and a second device, comprising the steps of:
- scanning an environment via a visual sensor, connected to the intermediary connection agent;
- receiving, at the intermediary connection agent, first visual information of a body signaling in the direction of the first device;
- receiving second visual information of a body signaling in the direction of the second device;
- receiving a connection confirmation command from a user;
- analyzing the first and second visual information by the intermediary connection agent in order to determine whether the respective signaling body parts belong to a single user;
- initiating the connection between the first and second device by the intermediary connection agent if the analysis is positive.

## Description

### Technical Field

The present invention relates to initiating a logical connection between a first device and a second device, and in particular to a novel user interface to establish such a connection.

### Background

Conventionally, to initiate a connection between two devices, for example a multimedia projector and a laptop, a list is presented by one of the devices (the laptop) showing other devices (the projector) which are known to be available for connection. From this list, a user selects the other device (the projector). By selecting the other device, a connection is initiated and the devices can connect.

A problem arises when the connection must be initiated in an environment where more than two devices are present, for example in a room where two projectors are present and operational for use. In such environment, simple intuition by the user is not enough to establish the connection correctly, namely the user must have prior knowledge, in particular the user must know the name of the target device (the projector to be used) to be able to select it in the list.

### Summary

It is an object of the present invention to provide a method and system for allowing a user to initiate a logical connection between a first and a second device without prior knowledge of the devices.

To this end, the invention provides a method for initiating a logical connection between a first device and a second device which are registered at an intermediary connection agent, the method comprising the steps of:
- scanning an environment of the intermediary connection agent via at least one visual sensor, operationally connected to the intermediary connection agent, to detect predetermined body language signals of users;
- receiving, at the intermediary connection agent from the at least one visual sensor, first visual information of at least a part of a body signaling in the direction of the first device;
- receiving, at the intermediary connection agent from the at least one visual sensor, second visual information of at least a part of a body signaling in the direction of the second device;
- receiving, at the intermediary connection agent, a connection confirmation command from a user in said environment;
- analyzing the first and second visual information by the intermediary connection agent in order to determine whether the respective signaling body parts belong to a single user;
- initiating the logical connection between the first device and the second device by the intermediary connection agent if the analysis is positive and if the first and second visual information and the connection confirmation command are received in a predetermined time frame.

Without prior knowledge of a device, a user can point at the device or look at the device. The present invention provides in a mechanism where the body language of the user, the pointing or looking, provides information to an intermediary connection agent regarding 'who' (which devices) to connect. The user furthermore confirms the connection command to the intermediary connection agent. Such confirmation can be made via known input devices such as a keyboard, mouse, touchpad or voice command. In this context, a confirmation can be as simple as a 'yes', and no prior knowledge of the devices is required. The intermediary connection agent further uses a time criterion to authenticate a connection instruction before initiating the connection.

Preferably, the method further comprises, prior to the scanning step, the steps of:
- registering the first device at the intermediary connection agent as being in the environment;
- registering a second device at the intermediary connection agent as being in the environment.

The registration of devices makes the use of the intermediary connection agent more flexible in the sense that devices do not need to be pre-registered. This allows a variety of devices to be registered, enhancing the usability of the intermediary connection agent.

Preferably, the at least a part of a body signaling in the direction of the first and second device comprises a face eye-gazing in the direction of respectively the first and second device. From a technological point of view, eye-gazing can relatively easy be recognized by a vision sensor and if recognized, the direction of gazing can be deduced by the vision sensor, thereby making it a body language signal suitable for use in the present invention. From a usability point of view, it is natural human behavior to look at an object to select it out of a plurality of objects. It requires no special knowledge of the selected object.

Preferably, the step of analyzing comprises using face recognition algorithms to determine whether the respective faces belong to a single user. Face recognition algorithms are able to determine, with a degree of certainty, whether faces in two images belong to the same person. This allows the eye-gazing captures to be used to not only identify the devices to be connected, but also to verify at least in part the authenticity of the command.

Preferably, the first visual information is received from a visual sensor located at the first device. Preferably, the second visual information is received from a visual sensor located at the second device. Because the device comprises a visual sensor, a user eye-gazing at the device thus looks straight at the visual sensor. This simplifies the task of detecting eye-gazing as well as it simplifies the algorithm for determining whether two captured eye-gazing faces belong to a single user.

Preferably, the connection confirmation command is received in the form of an audio signal of a user's voice, captured by a microphone operationally connected to the intermediary connection agent, the audio signal being analyzed using speech recognition algorithms to deduce the connection confirmation command. If the selecting of devices is done via visual signaling and the confirming of the selecting via audio signaling, no physical input is necessary. Audio and video communication, respectively speaking and moving, is a natural way of human communication, thereby enhancing the user-friendliness of the system.

Preferably, the connection confirmation command is received in the form of a computer signal from a computer input device provided for converting a physical input of a user to the computer signal. A plurality of computer input devices are known which convert a physical input of a user into a computer signal, such as a mouse, keyboard, touchpad, button and a remote control. Such input devices are known by many users and there is therefore no significant burden for a user to use such input devices. A further advantage is that signals coming from such input devices do not need a complex analysis to deduce the meaning thereof, unlike audio signals.

Preferably, the connection confirmation command comprises a cooperation action, which cooperation action is initiated by the intermediary connection agent after the logical connection has been initiated. A connection between two devices is usually made for a higher reason than the mere connection itself, it is made to perform a joint action or cooperation. By adding this cooperation action to the confirmation command, the intermediary connection agent can go a step further than only initiating the connection, and can also initiate the cooperation. Since it is likely that a user establishes a connection with the purpose of performing a cooperation action, integrating the latter and initiating this action enhances the usability of the system.

Preferably, visual indicators are provided, the method further comprising steering the visual indicators to indicate to the single user upon detection of the predetermined body language signal. Preferably, the indicator furthermore indicates the direction in which the predetermined body language signal is made. By giving visual feedback to the user, the confidence in the system can be increased thereby enhancing the user-friendliness of the system.

The invention further provides in an intermediary connection agent provided to execute the above-described method. The invention further provides in a computer program comprising instructions to execute the above-described method.

### Brief description of the figures

Some embodiments of apparatus and/or methods in accordance with embodiments of the present invention are now described, by way of example only, and with reference to the accompanying drawings, in which:
figure 1 illustrates an environment where the invention is applicable;
figure 2 illustrates a network where the invention is applicable;
figure 3 schematically shows an embodiment of an intermediary connection agent; and
figure 4 shows a flow diagram of an embodiment of the invention.

### Detailed description of embodiments

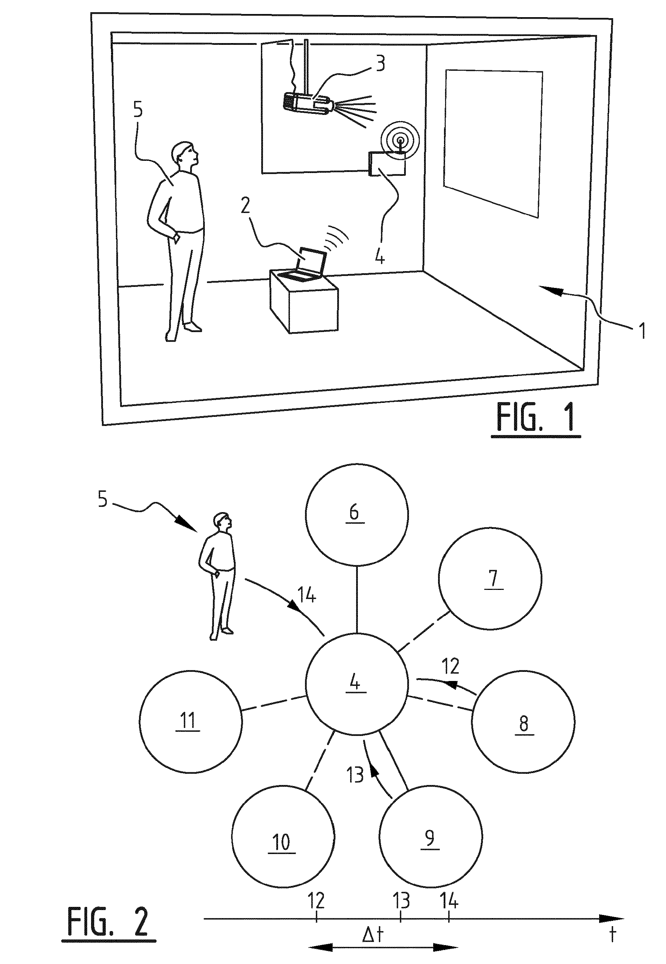

Figure 1 shows an environment 1 where two devices are present, being a laptop 2 and a projector 3. The laptop 2 is via a wireless network registered at the intermediary connection agent 4 such that the connection agent 4 knows the laptop is present in the environment 1. The projector 3 is connected to the intermediary connection agent 4 via a wire and the intermediary connection agent 4 is aware of the presence of the projector 3 in the environment.

A user 5, present in the environment, is to connect the laptop to the projector in order to show a presentation, stored on the laptop, via the projector. The user 5 will initiate the connection using body language signals. In a first step, the user gazes in the direction of the laptop 2. This eye-gazing will be detected by a vision sensor, which will as a result send first visual information to the intermediary connection agent 4. Preferably the vision sensor is a camera present in the laptop or at least in a close neighborhood of the latter, which camera is configured to detect eye-gazing and to, upon detection of eye-gazing, send a capture of at least the face eye-gazing in the direction of the laptop 2 to the intermediary connection agent 4.

In a second step, the user gazes in the direction of the projector 3. This eye-gazing will be detected by a vision sensor, which will as a result send second visual information comprising the face eye-gazing in the direction of the projector 3 to the intermediary connection agent 4. Preferably the latter vision sensor is present in or on the projector 3.

Besides the eye-gazing as first and second step, the user confirms the connection command to the intermediary connection agent 4. Whereas the first and second step are separate steps because a person cannot eye-gaze at two items at the same time, the connection command can be confirmed while eye-gazing for example by the user speaking out a voice command. The voice command preferably defines a cooperation action, and is for example: 'present slideshow via connection'.

The eye-gazing information is received by the intermediary connection agent 4 and will be analyzed via face recognition algorithms to determine whether the captured faces are sufficiently likely to belong to a single person. If they do, the analysis is positive, if they don't the analysis is negative and no further action is taken. When the analysis is positive and the intermediary connection agent receives a connection confirmation command, within a predetermined time frame, a connection between the projector 3 and the laptop 2 is initiated by the intermediary connection agent 4. Further functionality can be added by analyzing whether the confirmation command comprises a cooperation action command, for which an example is given above, and to not only initiate the connection but furthermore initiate the cooperation action.

Figure 2 schematically shows an intermediary connection agent 4, at which a plurality of devices 6-11 are registered. Thereby, the devices 6-11 can be registered at the intermediary connection agent 4 via a wired connection, as is shown by devices 6 and 9 (full line). The devices 6-11 can also be registered at the intermediary connection agent 4 via a wireless connection, as is shown by devices 7, 8, 10 and 11 (dashed line). As is clear from the figure, any combination of wired and wireless connections of devices registered at the intermediary connection agent can be made. The purpose of the registering is to let the intermediary connection agent 4 know that the registered device 6-11 is in the environment. Preferably, in an embodiment where a device comprises a vision sensor, the registration of the device at the intermediary connection agent enables the vision sensor to transmit visual information on which at least a part of a user is visible making a body language signal to the intermediary connection agent 4.

In figure 2, a timeline is shown on which three events are marked, which events are also shown as arrows between the devices 6-11 and the intermediary connection agent. The first event 12 is triggered by the user 5 eye-gazing at the first device 8, upon which the first device 8 sends 12 a package with first visual information relating to this eye-gazing to the intermediary connection agent 4. The second event 13 is triggered by the user 5 eye-gazing at the second device 9, upon which the second device 9 sends 13 a package with second visual information relating to the latter eye-gazing event to the intermediary connection agent 4. The third event 14 is the confirmation 14 by the user 5 of the connection command. This confirmation 14 can be received by the intermediary connection agent 4 in various manners such as via a button push or via an audio message. If three events 12, 13 and 14 are received by the intermediary connection agent 4 within a predetermined time period At, and if the intermediary connection agent 4 determines that the first and second visual information relate to a single user, a logical connection between the first device 8 and second device 9 is initiated by the intermediary connection agent 4.

The first and second device can be any electronic device that is capable of communicating with another electronic device. The above-described example relates to showing a presentation present on a laptop (first device) on a projector (second device). However many devices can be linked for various reasons. A user could connect a smartphone (first device) to a wireless router (second device) to establish an internet connection. A user could connect a music carrier to a speaker system to play music through the speakers. A user could connect an authentication device to an elevator system to get access to a restricted level in a building. A user could connect a first tablet computer to a second tablet computer to exchange data files. In a further embodiment of the invention, it is possible to link three devices. For example a computer could be linked to a projector and could be linked to a smartphone, where the smartphone could function as remote control of the computer showing a presentation via the projector. Preferably the second device is physically separated from the first device. Preferably, the second device is physically located at a predetermined distance from the first device in the environment.

The intermediary connection agent 4 is in the figures illustrated as a separate device. However is should be clear that the intermediary connection agent 4 can be integrated into a computer which meanwhile functions as a first or second device. The intermediary connection agent 4 can also be integrated into a wireless networking device such as a router or a switch.

The intermediary connection agent 4 is able to analyze and determine whether first visual information and second visual show signaling body parts belonging to a single user. This analysis can be executed by a processor and via programming instructions located in the intermediary connection agent 4. However as an alternative, still falling within the scope of the invention, the intermediary connection agent 4 is operationally connected to an external device which is provided to execute the analysis and report the outcome of the analysis back to the intermediary connection agent 4. For the physical location of the processor for processing the audio signal, similar reasoning applies, thus it can be integrated into the intermediary connection agent 4 or it can be foreseen in one or more separate devices operationally connected to the intermediary connection agent 4. Similarly, in the embodiment where the intermediary connection agent 4 is provided to receive a connection confirmation command via audio, the microphone can be integrated into the intermediary connection agent 4 or can be located in an external device operationally connected to the intermediary connection agent 4. For the physical location of the vision sensor, similar reasoning applies, thus it can be integrated into the intermediary connection agent 4 or it can be foreseen in one or more separate devices operationally connected to the intermediary connection agent 4.

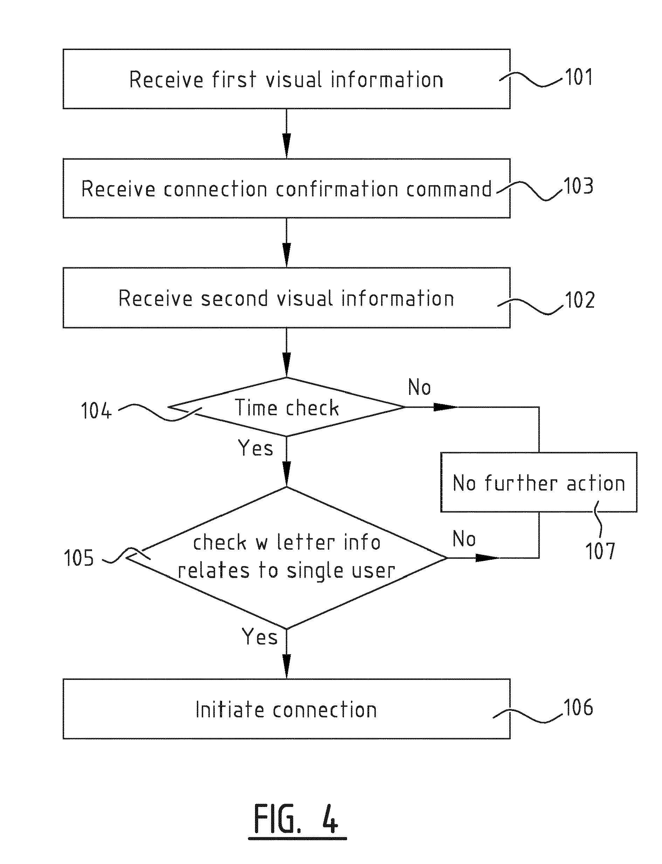

Figure 4 shows a flowchart wherein subsequent steps in the method are shown. In step 101, the first visual information, comprising a capture of at least a part of a body signaling in the direction of a first device, is received by the intermediary connection agent.

In step 102, the second visual information, comprising a capture of at least a part of a body signaling in the direction of a second device, is received by the intermediary connection agent.

In step 103, the connection confirmation command is received by the intermediary connection agent.

The sequence of the step 101, 102 and 103 is of less importance in the execution of the invention, and can be amended for a specific embodiment, or can be left undefined so that any sequence will be accepted by the intermediary connection agent 4.

After step 101, 102 and 103, step 104 of determining whether the information is received in a predetermined period of time, is executed. If the outcome is positive (Yes) meaning that the information of step 101, 102 and 103 are received within a predetermined time period, the method goes further with the step 105. In case the outcome is negative (no), no further action 107 is taken.

In step 105, it is analyzed whether the signaling body part comprised by the first visual information and the second visual information belong to a single user. If the outcome is positive (Yes), the method goes further with the step 106. In case the outcome is negative (no), no further action 107 is taken. The sequence of the steps 105 and 104 can be amended for a specific embodiment, or can be left undefined and for example depending on availability of the means executing the steps.

In step 106, the connection between the first device and the second device is initiated when the time check step 104 and the check whether info relates to single user step 105 are positive.

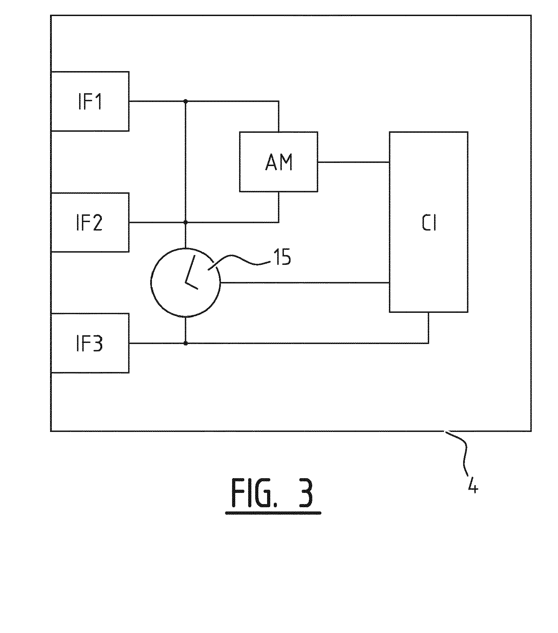

Figure 3 shows an embodiment of an intermediary connection agent 4 with its components schematically illustrated therein. The figure shows a first interface IF1 adapted to receive first visual information of at least a part of a body signaling in a direction of a first device. A second interface IF2 is adapted to receive second visual information of at least a part of a body signaling in a direction of a second device. A third interface IF3 is adapted to receive a connection confirmation command from a user. The first interface IF1 and second interface IF2 are operationally connected to an analyzing means AM, to receive the first and second visual information. The analyzing means AM is configured to determine whether the respective signaling body parts, comprised by respectively the first and second visual information, belong to a single user. A clock 15 is operationally connected to the first interface IF1, the second interface IF2 and the third interface IF3 and is adapted to confirm that the first and second visual information and the connection confirmation command are received at the intermediary connection agent in a predetermined period of time.

The intermediary connection agent 4 furthermore comprises a connection initiator CI operationally connected to the analyzer and to the clock and adapted to initiate the logical connection between the first and second device if the analysis made by the analyzing means AM and by the clock 15 is positive.

The visual sensor is provided to detect body language signals. In one embodiment of the invention, a central video camera is present in an environment, for example above a projection screen, to scan the environment for body language signals of users. This central video camera is integrated into the intermediary connection agent 4 or is formed as a separate device operationally connected to the intermediary connection agent 4. Besides detecting the body language signals, the visual sensor may also determine the direction in which the body language signal is made to assign the latter signal to a registered device. Therefore, according to this first embodiment, the visual sensor is provided with knowledge linking registered devices to body language signaling direction zones.

According to a further embodiment of the invention, each device is provided with a visual sensor to detect body language signals. The advantage of providing each device with a vision sensor, is that the direction of the body language signal is relative (in contrast with the embodiment with only one vision sensor, where an absolute direction is detected) and towards the device. Such relative direction is easier to program and to detect.

A combination can be made between the latter two embodiments, where some devices are provided with a vision sensor of their own, and other devices are not provided with a vision sensor themselves.

A body language signal can be defined as a visually recognizable predetermined position or movement of at least a part of a body of a user. The vision sensor or vision sensors are provided to detect body language signals of a user 5. In principle, any visual body language signal that comprises a direction, for example finger-pointing at an object or eye-gazing at an object, can be programmed to be detected by a vision sensor as a predetermined position of the body. Although static body language signals are preferred, static meaning that both the signal and the direction is derivable from a single image, dynamic signals can also be programmed to be detected by a vision sensor. An example of the latter would be a motion of the hand towards the device. In this example, a set of subsequent images, a video fragment, is necessary to deduce the direction of the signal.

The term 'eye-gazing' in the direction of an object by a user will in the context of this application be defined as looking straight at the object for a predetermined time. The predetermined time is larger than 0,1 second, preferably larger than 0,5 second, more preferably larger than 1 second, the predetermined time allowing the vision sensor to recognize the users look as eye-gazing. Preferably, to be recognized as eye-gazing, the user stands substantially still with respect to the vision sensor, making the preferred definition of eye-gazing: looking straight at the object while not moving for a predetermined time. In this context, it will be clear that when placeholders are used for objects, these placeholders become the eye-gazing object.

The connection confirmation command 14 can be provided to the intermediary connection agent 4 in a lot of ways. A physical computer input device such as a keyboard, mouse, touchpad or button, is operationally connected to the intermediary connection agent 4 to transmit an input of the user on this device to the connection agent 4. The connection confirmation command 14 can be a button stroke, a mouse movement, or any other input detectable by the input device. Alternatively, the intermediary connection agent 4 itself can be provided with computer input means to directly receive the confirmation command from the user 5. Alternatively, a microphone is provided, connected to analyzing means running speech recognition algorithms, operationally connected to the intermediary connection agent 4 to provide the latter with a connection confirmation command based on a speech of the user 5. Alternatively, the connection confirmation command is in the form of a body language signal receivable via the vision sensors. An example of such signal is a nod of the head, or a smile of the user 5.

According to a preferred embodiment, the connection confirmation command comprises cooperation action instructions. This allows an intermediary connection agent 4 to not only initiate the logical connection, but also inform at least one of the first and second device about the cooperation action, in this manner also initiating the cooperation.

In a preferred embodiment of the invention, the intermediary connection agent 4 provides a list of cooperation actions that are possible to be performed with the first and second device, after the latter devices are selected by the user via body language signals. The user 5 is in a further step requested to confirm one of the cooperation actions from the provided list.

Alternatively, the intermediary connection agent 4 generates a vocal query message representing the list of cooperation actions that are possible to be performed with the first and second device. Further selection from the list can be made and triggered via speech recognition means.

The intermediary connection agent 4 analyzes the first and second visual information to detect whether the respective signaling body parts belong to a single user. Several techniques can be applied to obtain such detection, depending on which part of the body is visible on the first and second visual information. For example if a face is visible, face recognition algorithms can be used to determine whether the shown face of the first visual information corresponds to the face of the second visual information. An alternative technique would be to detect, using at least two vision sensors in the environment, where the user is located in the environment. If it is determined that the user making the body signal towards the first device is located at the same spot in the environment as the user making the body signal towards the second device, it is considered as coming from a single user.

Further functionality can be added by comparing the first and/or second visual information with a database comprising corresponding visual information from registered users. Such comparison leads to an identification of a user, when a match is found with a visual information record in the database. Such identification can be used to manage access rights. Such identification can furthermore be used to send messages to the user's mobile phone for example to list the possible cooperation actions to the user. Further logic can be added by comparing the position in the environment of the person in the first visual information with the position in the environment of the person in the second visual information, to only identify these persons as a single person when the positions match.

The first visual information, the second visual information and the connection confirmation command are received within a predetermined period of time to be detected as being interrelated. The predetermined period of time is preferably less than 60 seconds, more preferably less than 20 seconds, most preferably less than 10 seconds. As a further requirement, a minimum time period can be programmed to be required in between subsequently received information/commands.

A logical connection is initiated by the intermediary connection agent 4 when at least a part of the conditions explained above are fulfilled. The logical connection can be initiated by the intermediary connection agent 4 by providing one of the first and second device with the name or digital address of the other of the first and second device. Upon receipt of the name or digital address, the one of the first and second device is triggered to contact the other of the first and second device to set up a connection.

A plurality of devices can be registered with the intermediary connection agent 4. In this context, some of the plurality of devices can be sold together with the intermediary connection agent 4 and are pre-registered at the intermediary connection agent 4 so that no further registration is required when installing the system. Other devices can be registered when entered in the environment.

Preferably the intermediary connection agent 4 and/or the registered devices 2, 3, 6 - 11, are provided with visual indicators to give feedback to a user when utilizing the system. Preferably, a light, for example a led, is provided at every vision sensor, which light is provided to illuminate when the vision sensor detects the body language signal in the direction of a device. The light will indicate to the user that his signal is recognized, which will enhance the confidence of the user utilizing the system, thereby thus enhancing the user-friendliness of the system.

Further confirmation commands of the user to the intermediary connection agent 4 can be added to enhance the usability and energy consumption of the system. For example an activation command can be added to the method, where the user pushes a button on the intermediary connection agent 4 or on a remote control operationally connected to the intermediary connection agent 4 in order to start the scanning step of the method. In the same manner, a stop command can be added to the method.

The invention allows implementing different combinations of gesture recognition, face recognition and speech recognition. Thereby, each one can carry connection confirmation command information and/or cooperation action information.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

A person of skill in the art would readily recognize that steps of various above described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Method for initiating a logical connection between a first device and a second device which are registered at an intermediary connection agent, the method comprising the steps of:
- receiving, at the intermediary connection agent from at least one visual sensor, first visual information of at least a part of a body signaling in the direction of the first device;
- receiving, at the intermediary connection agent from the at least one visual sensor, second visual information of at least a part of a body signaling in the direction of the second device;
- receiving, at the intermediary connection agent, a connection confirmation command from a user in said environment;
- analyzing the first and second visual information by the intermediary connection agent in order to determine whether the respective signaling body parts belong to a single user;
- initiating the logical connection between the first device and the second device by the intermediary connection agent if the analysis is positive and if the first and second visual information and the connection confirmation command are received in a predetermined period of time.

2. Method according to claim 1, further comprising the steps of:
- scanning an environment of the intermediary connection agent via the at least one visual sensor, operationally connected to the intermediary connection agent, to detect predetermined body language signals of users;

3. Method according to claim 1 or 2, further comprising the steps of:
- registering the first device at the intermediary connection agent as being in the environment;
- registering a second device at the intermediary connection agent as being in the environment.

4. Method according to claim 1, 2 or 3, wherein the at least a part of a body signaling in the direction of the first and second device comprises a face eye-gazing in the direction of respectively the first and second device.

5. Method according to claim 4, wherein the step of analyzing comprises using face recognition algorithms to determine whether the respective faces belong to a single user.

6. Method according to any of the previous claims, wherein the first visual information is received from a visual sensor located at the first device.

7. Method according to any of the previous claims, wherein the second visual information is received from a visual sensor located at the second device.

8. Method according to any of the previous claims, wherein the connection confirmation command is received in the form of an audio signal of a users voice, captured by a microphone operationally connected to the intermediary connection agent, the audio signal being analyzed using speech recognition algorithms to deduce the connection confirmation command.

9. Method according to any of the claims 1-7, wherein the connection confirmation command is received in the form of a computer signal from a computer input device provided for converting a physical input of a user to the computer signal.

10. Method according to any of the previous claims, wherein the connection confirmation command comprises a cooperation action, which cooperation action is initiated by the intermediary connection agent after the logical connection has been initiated.

11. Method according to any of the previous claims, wherein visual indicators are provided, the method further comprising steering the visual indicators to indicate to the single user upon detection of the predetermined body language signal.

12. Method according to claim 11, wherein the indicator furthermore indicates the direction in which the predetermined body language signal is made.

13. Intermediary connection agent for initiating a logical connection between a first device and a second device which are registered at the intermediary connection agent, comprising:
- a first interface adapted to receive first visual information of at least a part of a body signaling in a direction of a first device;
- a second interface adapted to receive second visual information of at least a part of a body signaling in a direction of a second device;
- a third interface adapted to receive a connection confirmation command;
- analyzing means, operationally connected to the first and second interface to receive the first and second visual information, configured to determine whether the respective signaling body parts belong to a single user;
- a clock adapted to confirm that the first and second visual information and the connection confirmation command are received at the intermediary connection agent in a predetermined period of time
- a connection initiator operationally connected to the analyzer and to the clock and adapted to initiate the logical connection if the analyses made by the analyzing means and by the clock are positive.

14. Computer program comprising instructions to execute the method according to one of the claims 1-12.
